# EUROPÄISCHE PATENTSCHRIFT

(11) **EP 1 631 599 B1**
(45) Veröffentlichungstag und Bekanntmachung des Hinweises auf die Patenterteilung: **28.03.2007**
(21) Anmeldenummer: 04733562.5
(22) Anmeldetag: 18.05.2004
(51) Int. Cl.: C08F 2/02, B29C 47/42, C09J 9/00

(54) **VERFAHREN ZUR KONTINUIERLICHEN HERSTELLUNG VON POLYMEREN AUS VINYLISCHEN VERBINDUNGEN DURCH SUBSTANZ- BEZIEHUNGSWEISE LÖSUNGSMITTELPOLYMERISATION**
METHOD FOR THE CONTINUOUS PRODUCTION OF POLYMERS MADE OF VINYL COMPOUNDS BY SUBSTANCE AND/OR SOLVENT POLYMERISATION
PROCEDE DE PREPARATION EN CONTINU DE POLYMERES, A PARTIR DE COMPOSES VINYLIQUES, PAR POLYMERISATION DE SUBSTANCE OU POLYMERISATION EN SOLUTION

(30) Priorität: 19.05.2003 DE 10322830
(43) Veröffentlichungstag der Anmeldung: 08.03.2006
(73) Patentinhaber: tesa AG, 20253 Hamburg (DE)
(72) Erfinder: KÖNIG, Sven, 22337 Hamburg (DE); ERWIN, Jessica, 20535 Hamburg (DE); MASSOW, Klaus, 22147 Hamburg (DE); ZÖLLNER, Stephan, 22043 Hamburg (DE)
(74) Vertreter: Stubbe, Andreas
(86) Internationale Anmeldenummer: PCT/EP2004/005339
(87) Internationale Veröffentlichungsnummer: WO 2004/101626

(56) Entgegenhaltungen:
- DE-A- 3 030 541
- US-A- 4 690 989

## Beschreibung

Die vorliegende Erfindung betrifft ein verbessertes Verfahren zur kontinuierlichen Herstellung von Polymeren aus vinylischen Verbindungen durch Substanz- beziehungsweise Lösungsmittelpolymerisation.

Die radikalische Polymerisation von Vinylmonomeren ist bekannt und umfangreich beschrieben (Ullmann's Encyclopedia of Industrial Chemistry, 2^{nd} Edt. Vol. A21, 1992, 305ff, VCH Weinheim). Polymerisationen sind mit einer starken Wärmeentwicklung und einem Anstieg der Viskosität verbunden. Die hohen Viskositäten können zu Problemen der Vermischung und damit auch der Wärmeabfuhr und Reaktionsführung führen.

Polymerisationen werden im Rührkessel oder anderen Reaktoren durchgeführt, die Mischeinbauten zur Durchmischung und zur Wärmeabfuhr vorweisen (Ullmann's Encyclopedia of Industrial Chemistry, 2^{nd} Edt. Vol. B4, 1992, 87ff, VCH Weinheim). Ein solches Verfahren kann sich jedoch bei Reaktionen, bei denen viel Reaktionswärme zu-oder abgeführt werden muss, als schwer durchführbar erweisen. Dies gilt in besonderer Weise, wenn der Anteil an Lösemitteln gering ist oder eine Polymerisation sogar gänzlich in Abwesenheit von Lösemitteln durchgeführt wird.

Des weiteren sind Reaktoren bekannt, die mit statischen Misch- und Kühleinrichtungen querschnittsfüllend ausgerüstet sind. Diese sogenannten statischen Reaktoren werden zur Verringerung der Viskositätsänderung im Reaktor auch als Schlaufenreaktoren betrieben, das heißt, ein Teil der Polymerisatlösung wird mit dem Zulauf gemischt, während ein anderer Teil dem Reaktor entnommen wird und in einem nachgeschalteten Rohrreaktor als Pfropfenströmung weiter auspolymerisiert wird. Derartige Reaktoren sind beispielsweise in der EP 0 755 945 A1 beschrieben.
Eine Vereinfachung dieses Verfahrens besteht in der Polymerisation in einem Spiralschlangen-Wärmeaustauscher (DE 199 15 916 A1), bei dem das Rohrvolumen am Gesamtvolumen des Reaktors in der Regel 10 % nicht übersteigt. Nachteilig ist die Notwendigkeit hoher Drücke und Vermischungsprobleme bei hoher Viskosität.

Weiterhin ist bekannt, Polymerisationen in einem Einschnecken- oder Doppelschneckenextruder durchzuführen, was zu Vorteilen bei hoher Viskosität führt, beispielsweise beschrieben in US 4,619,979 A. Dieses Verfahren führt jedoch zu Polymeren mit einem relativ hohen Gelanteil von zum Teil 55 %. Nachteilig ist außerdem die geringere spezifische Kühlfläche im Vergleich zu der, die beispielsweise Rohrbündelreaktoren (EP 0 752 268 A1) aufweisen, wodurch die Raum-Zeit-Ausbeute limitiert wird.

Planetwalzenextruder sind seit längerer Zeit bekannt und fanden zuerst Einsatz in der Verarbeitung von Thermoplasten wie zum Beispiel PVC, wo sie hauptsächlich zum Beschicken der Folgeeinheiten wie zum Beispiel Kalander oder Walzwerke verwendet werden. Durch ihren Vorteil der großen Oberflächenerneuerung für Material- und Wärmeaustausch, mit dem sich die über Friktion eingebrachte Energie rasch und effektiv abführen lässt, sowie der geringen Verweilzeit und des engen Verweilzeitspektrums hat sich ihr Einsatzgebiet in letzter Zeit unter anderem auch auf Misch- und Compoundierprozesse erweitert, die eine besonders temperaturkontrollierte Fahrweise erfordern. Planetwalzenextruder gibt es je nach Hersteller in verschiedenen Ausführungen und Größen. Je nach gewünschter Durchsatzleistung liegen die Durchmesser der Walzenzylinder typischerweise zwischen 70 mm und 400 mm.

Planetwalzenextruder in bisher bekannter Ausführung haben in der Regel einen Füllteil und einen Prozessteil, in dem das Aufschmelzen, Kühlen, Mischen oder Compoundieren erfolgt.
Der Füllteil besteht aus einer Förderschnecke, auf die sämtliche Feststoffkomponenten kontinuierlich dosiert werden. Die Förderschnecke übergibt das Material dann dem Prozessteil. Es gibt aber auch Ausführungsformen ohne Schneckenteil, bei denen der Planetwalzenextruder vertikal steht und das Material direkt zwischen Zentral- und Planetenspindeln aufgegeben wird.

Der Prozessteil besteht aus einem oder mehreren hintereinander geschalteten Walzenzylindern, innerhalb derer sich eine angetriebene Zentralspindel und die sogenannten Planetenspindeln befinden. Walzenteile, Zentralspindel und Planetenspindeln weisen eine Schrägverzahnung auf, die für den Materialtransport innerhalb des Prozessteils des Planetwalzenextruders sorgen. Die Planetenspindeln werden über Zahneingriff von der Zentralspindel angetrieben. Die Drehzahl der Zentralspindel und damit die Umlaufgeschwindigkeit der Planetenspindeln können variiert werden und sind damit ein wichtiger Parameter zur Steuerung der Prozesse.
Die Materialien werden zwischen Zentral- und Planetenspindeln beziehungsweise zwischen Planetenspindeln und Schrägverzahnung des Walzenteils so umgewälzt, so dass eine intensive Stoffvermischung beziehungsweise ein effektiver Wärmeaustausch zwischen den Oberflächen der Spindeln und den Walzenzylindern erfolgt.

Die Anzahl der in jedem Walzenzylinder umlaufenden Planetenspindeln kann ausgewählt und somit den Erfordernissen des Prozesses angepasst werden. Die Spindelanzahl beeinflusst das freie Volumen innerhalb des Planetwalzenextruders, die Verweilzeit des Materials im Prozess und bestimmt zudem die Flächengröße für den Wärme- und Materialaustausch. Bei konstantem Walzenzylinderdurchmesser lässt sich in der Regel mit größerer Spindelanzahl eine bessere Mischwirkung beziehungsweise ein größerer Produktdurchsatz erzielen. Allerdings ist die mittlere Verweilzeit des Materials bei dieser Fahrweise geringer, was bei der Durchführung von verweilzeitorientierenden Prozessen zu berücksichtigen ist. Es gilt also, die Bestückung des Prozessteils den Erfordernissen des Prozesses im Hinblick auf thermodynamischen Erfordernisse, Effizienz und Produktqualität anzupassen.

Die maximale Anzahl an Planetenspindeln, die sich zwischen Zentralspindel und Walzenzylinder einbauen lässt, ist abhängig vom Durchmesser des Walzenzylinders und vom Durchmesser der verwendeten Planetenspindeln. Bei Verwendung größerer Walzendurchmesser, wie sie zum Erzielen von Durchsatzraten im Produktionsmaßstab notwendig sind, beziehungsweise kleinerer Durchmesser für die Planetenspindeln können die Walzenzylinder mit einer größeren Anzahl an Planetenspindeln bestückt werden. Typischerweise werden bei einem Walzendurchmesser von D = 70 mm bis zu sieben Planetenspindeln verwendet, während bei einem Walzendurchmesser von D = 200 mm zum Beispiel zehn und bei einem Walzendurchmesser von D = 400 mm beispielsweise 24 Planetenspindeln verwendet werden können.

Es gibt verschiedene Ausführungsform an Planetenspindeln, die dem jeweiligen Prozessfortschritt angepasst werden. So kann es vorteilhaft sein, Pfanetenspindeln einzusetzen, die über ihren Umfang Unterbrechungen aufweisen und damit die eigentlich strenge Fördercharakteristik der Schrägverzahnung unterbrechen. Durch den Einsatz dieser Spindelart in einem oder mehreren Walzenzylinder kommt es zu einer erhöhten axialen Quervermischung, mit der sich die Breite der Molekulargewichtsverteilung verringern und das Polymerisat an die Anforderungen anpassen lassen.

In diesem Zusammenhang wird auf die Patentanmeldungen beziehungsweise das Gebrauchsmuster DE 196 31 182 A1, DE 94 21 955 U1, DE 195 34 813 A1, DE 195 18 255 A1, DE 44 33 487 A1 verwiesen, die eine Übersicht zum Stande der Technik auf dem Gebiete der Planetwalzenextruder darstellen.

So wird darüber hinaus in DE 39 08 415 A1 die Verarbeitung von Gummimischungen beziehungsweise gummiähnlichen Mischungen mittels Planetwalzenextruder beschrieben. Vorbatche oder Fertigmischungen werden zum Zwecke einer Weiterverarbeitung auf Folgeeinrichtungen auf einem Planetwalzenextruder mastiziert und plastifiziert. Ebenfalls ist die Herstellung von Fertigmischungen im Planetwalzenextruder beschrieben. Hierbei werden zu den Gummivormischungen Vulkanisationssysteme und andere Komponenten zudosiert.

In der DE 297 10 235 U1 wird eine Vorrichtung zum Plastifizieren von Kunststoffmaterial offenbart, die aus mindestens zwei Planetwalzenextrudern in paralleler Anordnung besteht. Die Planetwalzenextruder speisen eine gemeinsame Austragsstufe, die ihrerseits ein Einschneckenextruder, ein Zwischenschneckenextruder oder eine Zahnradpumpe sein kann. Zwischen den Planetwalzenextrudern und der Austragsstufe kann weiterhin eine Entgasungseinheit geschaltet sein, die vorzugsweise aus einem mit Vakuum beaufschlagten Fallschacht besteht.

Auch in der US 3,825,236 A wird die Verwendung eines Planetwalzenextruders gezeigt, wobei sich dieser innerhalb eines Einschneckenextruders befindet. In der DE 23 03 366 A1 wird eine extrusionsfähige Masse aus thermoplastischem oder duroplastischem Kunststoff in Schneckenstrangpressen mit Planetwalzen hergestellt, wobei der als Granulat oder als Pulver vorliegende Kunststoff nach dem Stopfen im Bereich der Planetenwalzen mastiziert und plastifiziert sowie bis auf Extrusionsdruck verdichtet wird. Als erfindungswesentlich wird dabei beansprucht, dass der gestopfte Kunststoff bis zur Bildung von Festkörpern vorverdichtet, anschließend im Einzugsbereich der Planetenwalzen unter Druckabbau zerkleinert sowie mastiziert, plastifiziert sowie bis auf Extrusionsdruck verdichtet wird.

Aus der DE 198 06 609 A1 ist ein Verfahren zur kontinuierlichen lösungsmiftelfreien und mastikationsfreien Herstellung von Selbstklebemassen auf Basis von nichi-ihermopiastischen Elastomeren in einem kontinuierlich arbeitenden Planetwalzenextruder mit einem Füll- und einem Compoundierteil bekannt, wobei das Compoundierteil des Planetwalzenextruders zumindest von einem Walzenzylinder gebildet wird.

Das Verfahren setzt sich aus den folgenden Schritten zusammen:
a) Aufgabe der Festkomponenten der Selbstklebemasse wie Elastomere und Harze in den Füllteil des Planetwalzenextruders, gegebenenfalls Aufgabe von Füllstoffen, Farbstoffen und/oder Vernetzern,
b) Übergabe der Festkomponenten der Selbstklebemasse aus dem Füllteil in den Compoundierteil,
c) Zugabe der Flüssigkomponenten der Selbstklebemasse wie Weichmacher, Vernetzer und/oder weiterer klebrig machender Harze in den Compoundierteil,
d) Herstellung einer homogenen Selbstklebemasse im Compoundierteil und
e) Austragen der Selbstklebemasse.

Aus der DE 30 30 541 A1 ist Verfahrne bekannt, in dem eine Maschine Verwendung findet, bei der in einem Gehäuse mehrere achsparallele Förderwellen drehbar gelagert sind (siehe insbeosndere Figur 2 der D1). Ein solches Gerät ist unter der Bezeichnung Mehrwellenextrufder bekannt.
Ein Planetwalzenextruder wird nicht ewrwähnt.

Die US 4,690,989 A beschreibt einen Rührkessel, dessen Rührwellen mit einem Planetengetriebe angetrieben werden. Ein Planetwalzenextruder wird nicht genannt.

Aufgabe der vorliegenden Erfindung ist es, ein Verfahren zur kontinuierlichen Polymerisation von Vinylmonomeren zu Vinylpolymeren zur Verfügung zu stellen, das die Nachteile des Standes der Technik nicht oder zumindest nicht in dem Umfang aufweist.

Gelöst wird diese Aufgabe durch ein Verfahren, wie es im Hauptanspruch niedergelegt ist. Gegenstand der Unteransprüche sind dabei vorteilhafte Weiterbildungen des Verfahrens.

Demgemäss betrifft die Erfindung ein Verfahren zur kontinuierlichen Polymerisation von Vinylmonomeren zu Vinylpolymeren, wobei die Polymerisation in einem Planetwalzenextruder erfolgt.

In einer ersten vorteilhaften Ausführungsform des erfindungsgemäßen Verfahrens werden dabei Vinylpolymere erzeugt, die Molekulargewichte M_{w} von mehr als 400.000 g/mol und/oder Polydispersitäten (M_{w}/Mₙ) von größer 5 aufweisen.

Weiter bevorzugt ist, wenn die Polymerisation ohne Zugabe von Lösungsmittel erfolgt.

Eine weitere vorteilhafte Variante des erfindungsgemäßen Verfahrens zeichnet sich dadurch aus, dass die Polymerisation
a.) in einem hydraulisch gefüllten Planetwalzenextruder erfolgt,
b.) durch thermisch induzierten Zerfall von radikalbildenden Initiatoren durchgeführt wird,
c.) in Anwesenheit von 0 bis 25 Gew.-% eines Lösemittels erfolgt, bezogen auf die Vinylmonomeren, und
d.) in Anwesenheit von Harz oder Plastifizierungsmitteln in Anteilen von 0 bis 30 Gew.-%, bevorzugt in Anteilen von 0 bis 10 Gew.-%, besonders bevorzugt in Anteilen von 0 bis 5 Gew.-% durchgeführt wird.

Für das erfindungsgemäße Verfahren wird der Planetwalzenextruder bevorzugt so betrieben, dass er mit der Reaktionsmischung vollständig gefüllt ist. Aufgrund dieser sogenannten hydraulischen Füllung ist es möglich, den Reaktionsraum frei von die Polymerisation behindernden Sauerstoff zu halten sowie bei gegebenen Volumenstrom die mittlere Verweilzeit gegenüber einer Teilfüllung zu erhöhen. Beides dient der bestmöglichen Ausnutzung der Verfahrenslänge. Eine Inertisierung des Reaktionsvolumens ist jedoch auch durch Spülen mit Inertgas, beispielsweise Stickstoff, möglich. Am vorteilhaftesten für das Anspringverhalten der Reaktion ist eine zuvorige Inertisierung mit Stickstoff und durch das Befüllen mit der Reaktionsmischung eine hydraulische Füllung des Reaktors zu erzielen.

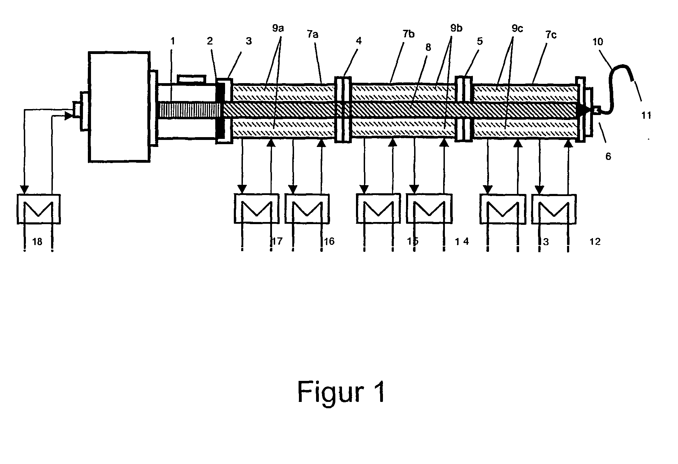

Für die Zugabe der Reaktionsmischung bedeutet das, dass der Planetwalzenextruder ohne das sonst übliche Füllteil - also ohne die der Zentralspindel vorgeschaltete Einschnecke - sondern ausschließlich mit dem oben genannten Prozessteil betrieben wird. Eine mögliche Ausführungsform dazu ist, dass die mit der Zentralspindel gekoppelte Einschnecke beispielsweise durch einen metallischen Schaft (1) gemäss Figur 1 zwischen Getriebe und Zentralspindel ersetzt wird, an dessen Ende sich eine Gleitringdichtung (2) befindet, die den Eingang des Prozessteils flüssigkeits- und gasdicht verschließt.

Die Zugabe der Reaktionsmischung erfolgt dann kontinuierlich über eine Bohrung (3) am Anfang des ersten Walzenzylinders direkt auf die Zentralspindel beziehungsweise auf die umlaufenden Planetenspindeln (9a bis 9c).

Die Monomeren können sowohl einzeln wie auch als Mischung dem Polymerisationsreaktor kontinuierlich zudosiert werden. Eine geringere Komplexität wird erreicht, wenn aus den Monomeren eine Vormischung hergestellt wird, die mittels Evakuierung beziehungsweise Durchleiten von Stickstoff beziehungsweise einer Kombination hieraus vom Sauerstoff befreit und dann dem Planetwalzenextruder zugeführt wird. Eine Vormischung von Monomeren ist in jedem Fall erforderlich, wenn eines oder mehrere der eingesetzten Monomere in fester Form vorliegt und es nicht in geschmolzener Form dem Polymerisationsreaktor zugeführt werden kann.

Bei Verwendung eines Planefinralzenextruders, der aus mehreren hintereinander geschalteten Walzenzylindern (7a bis 7c) besteht, können über Bohrungen (4 und 5) in den Verbindungsflanschen der Walzenzylinder weitere Stoffe wie Initiatoren oder Initiatorengemische, geschmolzene Harze, Weichharze, Lösemittel, Kettenübertragungsmittel oder andere mit einer Klebmasse verträgliche Plastifizierungsmittel wie Weichmacher oder Öle zum Polymerisationsprozess zugegeben werden.
Mit der Nachdosierung von geeigneten Initiatoren oder Initiatorengemischen lassen sich hohe Umsätze erzielen, ohne dass gleichzeitig durch hohe Primärradikalkonzentration geringe Molekulargewichte oder Vergelungen des Polymers induziert werden.

Mit der erfindungsgemäßen Zugabe von Harzen oder Plastifizierungsmitteln lässt sich die Viskosität der Reaktionsmischung und damit die Reaktionsgeschwindigkeit soweit absenken, dass die bei Substanzpolymerisationen, also bei Polymerisationen ohne Lösemittel, verstärkt auftretenden Vergelungstendenzen im Polymerisat aufgrund hoher Viskositäten (Geleffekt) verhindert werden können. Durch die effiziente Mischwirkung des Planetwalzenextruders in Kombination mit seiner extrem hohen Wärmeaustauschfläche, wird selbst bei Substanzpolymerisationen, d.h. bei Reaktionen ohne Lösemittel, die Reaktionsmischung so gut vermischt, dass die Vergelungstendenzen im Gegensatz zum Stand der Technik wesentlich vermindert wird.
Der Wärmeaustausch erfolgt über Zentralspindel (8) und Walzenzylinder (7a bis 7c), die dazu über Heiz-/Kühlgeräte mit Temperiermedium betrieben werden (12 bis 18). Auf eine den Reaktionsfortschritt berücksichtigende Temperaturführung und damit auf die Konzentration an Primärradikalen ist zu achten. So sollten hohe Primärradikalkonzentration nicht unmittelbar zum oder nach Polymerisationsstart erzeugt werden, damit einerseits hohe Molekulargewichte erhalten, und zum anderen Vergelungstendenzen des Polymers vermieden werden. Um eine große Bandbreite an Rezepturen fahren sowie die Eigenschaften der Polymerisate gezielt einstellen zu können, ist eine flexible Temperaturführung notwendig; daher ist es vorteilhaft, für die Zentralspindel und die Walzenzylinder separate Temperierkreise einzusetzen und die Walzenzylinder zudem mit mehr als einem Temperierkreis auszurüsten.

Für das erfindungsgemäße Verfahren wird als Temperiermedium aus thermodynamischen Gründen Wasser beziehungsweise Druckwasser bevorzugt, ist aber nicht hierauf beschränkt.

In einer vorteilhaften Ausführungsform des Verfahrens wird die Mischung der Vinylmonomeren vor Eintritt in den Planetwalzenextruder auf Temperaturen von mehr als 50 °C, vorzugsweise auf Temperaturen über 70 °C und besonders bevorzugt auf Temperaturen von mehr als 85 °C vorgewärmt, um einen raschen Reaktionsbeginn zu gewährleisten und eine gute Ausnutzung der Reaktorverfahrenslänge sicherzustellen. Die Höhe der Vorwärmtemperatur hängt vom jeweilig gewählten Initiatorsystem ab und sollte so gewählt werden, dass es nicht bereits außerhalb des Reaktors zur einer Polymerisation kommt, die zu einem Verstopfen der Zuführeinrichtungen führt.

Weiter vorzugsweise werden flüssige Initiatoren gekühlt und erst unmittelbar vor Eintritt des Monomerstroms in den Planetwalzenextruder den Vinylmonomeren zugegeben, wobei die Initiatoren mittels geeigneter Mischsysteme kontinuierlich hierin verteilt werden. Geeignete Mischsysteme sind zum Beispiel konventionelle Statische Mischer, sogenannte Mikromischer oder übliche dynamische Mischer mit geringem Eintrag an Scherenergie. Von festen Initiatoren werden vorzugsweise konzentrierte Lösungen in einem Monomer beziehungsweise in einer Monomerenmischung hergestellt, die zur besseren Stabilisierung gekühlt in einer Vorlage gehalten werden. Diese in Monomeren gelösten Initiatoren werden dann dem Hauptstrom von Monomeren unmittelbar vor Eintritt in den Planetwalzenextruder zugemischt, wobei für die Auswahl der Mischsysteme das oben Gesagte gilt.

Es existieren mehrere vorteilhafte Verfahrensvarianten, mit denen der Planetwalzenextruder betrieben wird.

Zunächst können Zentralspindel und Planetenspindeln entgegen der durch die Schrägverzahnung üblicherweise induzierten Materialförderrichtung drehen, wobei die Förderung des Reaktionsgemisches innerhalb des Planetwalzenextruders mittels der bevorzugten Speisepumpe für die Vinylmonomeren erfolgt. Diese Vorgehensweise ist bevorzugt geeignet, wenn die hergestellten Polymere nur geringe Viskositäten aufweisen, so dass die innerhalb des Planetwalzenextruders auftretenden Druckverluste sowie die durch die Spindelrotationen induzierte Rückwärtsförderung des Materials in Richtung Eduktzugabe durch die bevorzugte Speisepumpe überwunden werden können. Als Beispiel hierfür seien Polymerisate mit geringen Polymerisationsgraden, mit Anteilen an Lösemitteln oder Plastifizierungsmitteln sowie Polymerisate aus Reaktionen genannt, die nicht zu hohen Umsätzen geführt werden. Letztere Polymere werden allgemein als Prepolymere bezeichnet. Der nicht von den Spindeln unterstützte Stofftransport in Richtung Austrittsöffnung des Planetwalzenextruders bewirkt eine hydraulische Füllung des Reaktionsraums mit Monomer beziehungsweise Polymer während der gesamten Reaktionsphase und erhöht gegenüber einer Teilfüllung die mittlere Verweilzeit der Reaktionsmischung innerhalb des Aggregats.
Des weiteren können Zentralspindel und Planetenspindeln in gleicher Richtung wie die durch die Schrägverzahnung üblicherweise induzierte Materialförderrichtung drehen. Diese Vorgehensweise kommt zur Anwendung, wenn durch hohe Polymerisationsgrade beziehungsweise hohe Umsätze oder durch vollständige Abwesenheit von Lösemitteln oder Plastifizierungsmitteln so hohe Viskositäten im Polymerisationsreaktor auftreten, dass die damit verbundenen Druckverluste nicht mehr durch die Speisepumpe der Edukte überwunden werden können, sondern der Stofftransport über die Rotation der schrägverzahnten Spindeln erzwungen werden muss. Die erfindungsgemäß bevorzugte hydraulische Füllung des Reaktionsraums mit Reaktionsmischung lässt sich bei dieser Vorgehensweise dann dadurch erreichen, dass die Produktaustrittsöffnung des Planetwalzenextruders höher liegt als die Zugabeöffnung für die flüssigen Edukte. Dies lässt sich am einfachsten mittels eines Rohres (10) erreichen, das an die Austrittsöffnung des Planetwalzenextruders (6) montiert ist und dessen Auslauf (11) oberhalb der maximalen Produktfüllhöhe innerhalb des Planetwalzenextruders liegt. Aber auch eine schräge beziehungsweise senkrechte Aufstellung des Planetwalzenextruders sind dafür möglich.

Weiter vorzugsweise werden stromab der Verfahrenslänge des Planetwalzenextruders an mindestens einer Stelle weitere Initiatoren beziehungsweise initiatorenmischungen zugegeben.

Für die Polymerisation sind - wie bereits ausgeführt - Initiatoren erforderlich.
In einer vorteilhaften Ausführungsform weisen die Initiatoren zum Starten der Reaktion Halbwertszeiten von 10 Stunden bei Temperaturen kleiner 120 °C auf und sind gewählt aus der Gruppe der Azo-Initiatoren, der Gruppe der organischen Peroxide oder aus Gemischen von Initiatoren der genannten Gruppen, bevorzugt solche mit einer Vernetzungseffizienz kleiner als 20 %, insbesondere solche mit einer Vernetzungseffizienz kleiner als 10 %.

Die Initiatoren, die stromab der Verfahrenslänge zugegeben werden, weisen vorteilhafterweise Halbwertszeiten von 10 Stunden bei Temperaturen größer 50 °C auf und sind gewählt aus der Gruppe der Azo-Initiatoren, der Gruppe der organischen Peroxide oder aus Gemischen von Initiatoren der genannten Gruppen.

Als Lösemittel werden vorzugsweise Ester gesättigter Carbonsäuren (wie Ethylacetat), aliphatische Kohlenwasserstoffe (wie n-Hexan, n-Heptan oder Cyclohexan), Ketone (wie Aceton oder Methylethylketon), ein und mehrwertige aliphatische Alkohole (wie beispielsweise Methanol, Ethanol, iso-Propanol, Butanol oder Butandiol), Siedegrenzenbenzin, aromatische Lösungsmittel wie Toluol oder Xylol oder Gemische vorgenannter Lösungsmittel verwendet. Für die Polymerisation in wässrigen Medien beziehungsweise Gemischen aus organischen und wässrigen Lösungsmitteln werden zur Polymerisation bevorzugt Emulgatoren und Stabilisatoren zugesetzt.

Des weiteren ist es vorteilhaft, wenn die Vinylmonomeren Verbindungen enthalten beziehungsweise der bereits anpolymerisierten Reaktionsmischung Verbindungen zudosiert werden, die das Molekulargewicht während der Polymerisation mindern, sogenannte Regler. Diese können aus der Gruppe der Nitroxylverbindungen, Thiole, TEMPO-Derivate, Thioester, Thiocarbonate, Alkohole, Ether, halogenierten Kohlenwasserstoffen gewählt werden und können in Anteilen von 0 bis 5 Gew.-%, bevorzugt 0 bis 3 Gew.-%, besonders bevorzugt 0 bis 1 Gew.-% bezüglich der eingesetzten Vinylmonomeren enthalten sein.

In einer weiteren vorteilhaften Ausführungsform des erfindungsgemäßen Verfahrens werden dem Reaktionsgemisch nach Reaktionsstart Flüssigharze, Harzschmelzen oder Plastifizierungsmittel in Anteilen von 0 bis 30 Gew.-%, vorzugsweise in Anteilen von 0 bis 10 Gew.-%, weiter vorzugsweise von 0 bis zu 5 Gew.-% zugegeben.

Als zuzusetzende klebrigmachende Harze sind ausnahmslos alle vorbekannten und in der Literatur beschriebenen Klebharze einsetzbar. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C₅-, C₉- sowie andere Kohlenwasserstoffharze. Beliebige Kombinationen dieser und weiterer Harze können eingesetzt werden, um die Eigenschaften der resultierenden Klebmasse wunschgemäß einzustellen. Im allgemeinen lassen sich alle mit dem entsprechenden Polymer kompatiblen (löslichen) Harze einsetzen. Auf die Darstellung des Wissensstandes im "Handbook of Pressure Sensitive Adhesive Technology" von Donatas Satas (van Nostrand, 1989) sei ausdrücklich hingewiesen.

Besonders vorteilhaft werden die Vinylmonomeren zu mehr als 30 %, vorzugsweise zu mehr als 45 % zu Vinylpolymeren umgesetzt.

Des weiteren werden die Vinylpolymeren vorzugsweise von ihren flüchtigen Bestandteilen befreit. Das Abtrennen der flüchtigen Bestandteile kann dabei inline zum Herstellprozess der Vinylpolymeren erfolgen.

Die Vinylpolymeren, die nach dem erfindungsgemäßen Verfahren hergestellt werden, sind hervorragend geeignet, um in einer nachgeschalteten Verfahrensstufe als Vinyl-Prepolymere zur Herstellung von druckempfindlichen, vorzugsweise lösemittelfreien und druckempfindlichen Selbsthaftklebemassen eingesetzt zu werden.

Vorteilhafterweise werden dazu die Vinylpolymeren beziehungsweise die Vinylpolymercompounds inline zum Herstellprozess auf bahnförmige Trägermaterialien aufgebracht, so dass daraus Selbsthaftklebebänder resultieren.

Die Bestimmung der mittleren Molekulargewichte Mₙ (Zahlenmittel) und M_{w} (Gewichtsmittel) und der Polydispersität D erfolgt durch Gelpermeationschromatographie. Als Eluent wird THF mit 0,1 Vol.-% Trifluoressigsäure eingesetzt. Die Messung erfolgt bei 25 °C. Als Vorsäule wird PSS-SDV, 5 µ, 10² nm [10³ Å], ID 8,0 mm x 50 mm verwendet. Zur Auftrennung werden die Säulen PSS-SDV, 5µ, 10³ sowie 10⁵ und 10⁶ mit jeweils ID 8,0 mm x 300 mm eingesetzt. Die Probenkonzentration beträgt 4 g/l, die Durchflussmenge 1,0 ml pro Minute. Es wird gegen Polystyrol-Standards gemessen.

Das Verfahren zeigt bei der kontinuierlichen Polymerisation von Vinylmonomeren zu Vinylpolymeren Vorteile, die derartig nicht vorherzusehen waren.
Überraschend wurde gefunden, dass sich die Vermischungseigenschaften im Planetwalzenextruder zusammen mit der großen spezifischen Oberfläche besonders gut auf die Polymerisation von Vinylmonomeren auswirken. Die große spezifische Oberfläche ermöglicht eine schnelle und große Wärmeabfuhr, so dass im Planetwalzenextruder schnelle exotherme Reaktionen sicher durchführbar sind. Zudem hat dieses Aggregat große Vorteile bei der Vermischung von sehr hochmolekularen Polymeren, was sich besonders auf die Herstellung von Haftklebemassen positiv auswirkt. Es wurde gefunden, dass im Planetwalzenextruder Polymerisationen in Substanz, das heißt ohne zusätzliches Lösungsmittel und großer Raum-Zeit-Ausbeute durchführbar sind.

Im folgenden soll ein besonders vorteilhaft ausgestaltetes Verfahren mittels Figuren näher erläutert werden, ohne damit die Erfindung unnötig einschränken zu wollen,

Es zeigen
- Figur 1: eine Planetwalzenextruder-Konfiguration, die typischerweise verwendet wird,
- Figur 2: das erfindungsgemäße Verfahrensschema mit einem hydraulisch gefüllten Planetwalzenextruder aus Figur 1 sowie den Zuführeinheiten für die Einsatzkomponenten und
- Figur 3: das erfindungsgemäße zweistufige Verfahren einer kontinuierlichen, lösemittelfreien Polymerisation in einem Planetwalzenextruder mit nachgeschalteter Entfernung von Restmonomeren sowie Compoundierung zur einer druckempfindlichen Selbsthaftklebemasse, die danach inline einer Beschichtungseinheit zugeführt wird.

Figur 1 zeigt den erfindungsgemäßen Planetwalzenextruder, der aus drei hintereinander geschalteten Walzenzylindern (7a bis 7c) besteht und dessen hydraulische Füllung dadurch erreicht wird, dass dessen Prozessteil zum üblicherweise vorhandenen Füllteil mittels Gleitringdichtung gas- und flüssigkeitsdicht verschlossen wird und der Produktauslauf (11) oberhalb der maximalen Füllhöhe innerhalb des Planetwalzenextruders angeordnet wird.
(12) bis (17) zeigen beispielhaft den Wärmeaustausch über die Walzenzylinder, bei der für jeden Walzenzylinder zwei separate Heiz-/Kühlkreisläufe verwendet werden. Der Wärmeaustausch bei der Zentralspindel erfolgt vorzugsweise über einen separaten Temperierkreis (18).

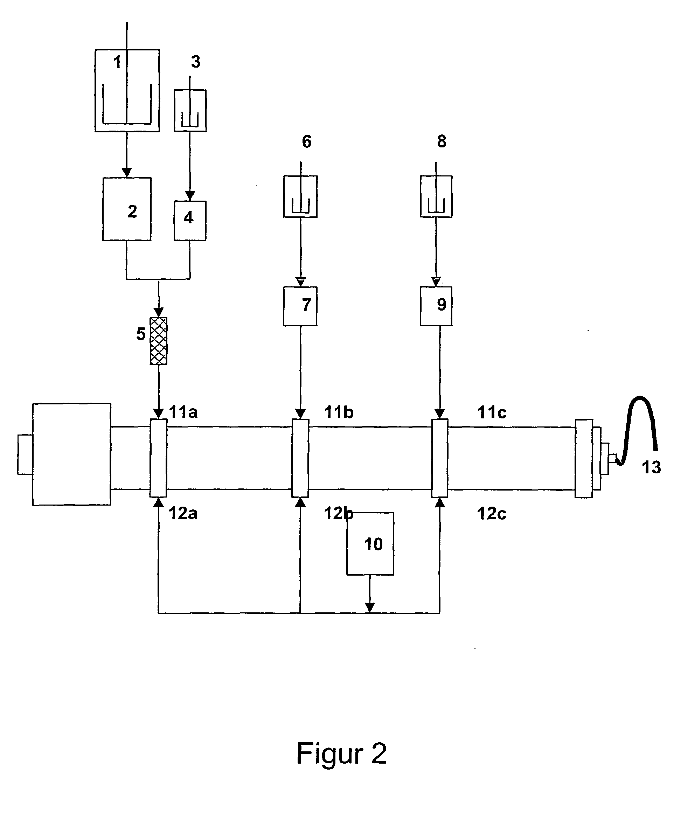

Figur 2 zeigt schematisch das erfindungsgemäße Verfahrensschema mit einem hydraulisch gefüllten Planetwalzenextruder aus Figur 1 sowie den Zuführeinheiten für die Einsatzkomponenten. Der besseren Übersichtlichkeit halber wird auf die Darstellung von Förderorganen, Dosier- oder Durchflussmesssystemen, Temperierungen und Stickstoffzufuhrleitungen verzichtet, da diese selbst nicht Gegenstand der Erfindung sind, sondern dafür Ausführungen in handelsüblicher Form verwendet werden können.

Bei Einsatz mehrerer Komponenten oder bei Verwendung eines festen Monomers, das in den flüssigen Monomeren löslich ist, wird in einem Monomer-Mischbehälter (1) eine Vormischung aus den Monomeren und gegebenenfalls weiterer Zusätze wie beispielsweise Kettenübertragungsmittel hergestellt, die anschließend in einen Vorratstank (2) überführt wird. Aus diesem Monomerentank (2) wird kontinuierlich der Hauptstrom an Monomeren entnommen, der in die Mischeinheit (5) gepumpt wird. Der Mischbehälter (1) und der Vorratstank (2) verfügen über eine Stickstoffversorgung, um das Monomer beziehungsweise die Monomerenmischung vom Sauerstoff zu befreien. Zudem sind sie temperierbar ausgeführt, um die Monomerenmischung adäquat vorzuwärmen.

Bei Verwendung eines festen Initiators für den Reaktionsstart wird dieser in einem Initiator-Mischbehälter (3) in einer kleinen Menge Monomer vorgelöst. Auch besteht die Möglichkeit, im Mischbehälter (3) weitere feste oder flüssige Initiatoren einzumischen, um damit einen für die Polymerisation günstigen Reaktionsverlauf zu bekommen. Der Initiator-Mischbehälter (3) und der zugehörige Vorratstank (4) verfügen über eine Stickstoffversorgung, um die monomerische Initiatorlösung frei von Sauerstoff zu halten. Wird die Reaktion mit nur einem Initiator, der zudem flüssig ist, gestartet, kann dieser auch direkt in den Initiator-Vorratstank (4) gefüllt werden, ohne eine Vormischung mit Monomer herzustellen. Initiator-Mischbehälter (3) und Vorratstank (4) verfügen vorzugsweise über eine Kühlung, um einen vorzeitigen Initiatorzerfall und damit einen vorzeitigen Reaktionsstart außerhalb des Planetwalzenextruders sicher zu vermeiden.

Die Initiatorlösung aus dem Vorratstank (4) wird kontinuierlich in die Mischeinheit (5) gefördert und dort mit dem Hauptstrom an Monomermischung aus Vorratstank (2) homogen vermischt, bevor die so hergestellte Reaktionsmischung in die erste Öffnung des Planetwalzenextruders (11 a) gefördert wird. Die Konzentration an Initiator in der Reaktionsmischung lässt sich über die Konzentration der in Vorratstank (4) befindlichen Initiatorlösung und der Menge an Initiatorlösung im Verhältnis zum Hauptstrom an Monomermischung definiert einstellen beziehungsweise variieren.

Jeder der beiden Ströme aus den Vorratstanks (2 und 4) wird separat über Pumpen eingestellt und geregelt. Die Dosierströme können dabei zum Beispiel über Rückwägung der auf Wägezellen stehenden Vorratstanks oder über kontinuierliche Massedurchflussmess- und Regelsysteme, zum Beispiel nach dem Prinzip der Corioliskraft, erfolgen. Auch volumetrische Dosierungen sind möglich, werden aber aufgrund ihrer geringeren Genauigkeit nicht bevorzugt.

Die Mischeinheit (5) sowie die nachfolgenden Leitungen sind temperierbar ausgeführt, um die Reaktionsmischung auf eine Temperatur zu erwärmen, die in der Nähe des Temperaturniveaus liegt, bei der die Reaktion durch den eingeleiteten Initiatorzerfall startet. Dadurch wird die Verfahrenslänge des als Polymerisationsreaktor dienenden Planetwalzenextruders in optimaler Weise ausgenutzt. Als Mischeinheit (5) eignen sich beispielsweise Statische Mischer, Mikromischer oder auch kontinuierlich arbeitende dynamische Mischer mit kleinen Volumina.

Zu hohe Startkonzentrationen an Initiatoren sind zu vermeiden, da dies zu hohen Reaktionsgeschwindigkeiten mit starker Exothermie führt. Die Folge kann eine ungleichmäßige Wärmeabfuhr sein, die oftmals mit einer verstärkter Neigung zu unerwünschter Gelbildung einhergeht. Aus diesem Grunde wird nur ein Teil des für einen hohen Umsatz notwendigen Initiators über die erste Einfüllöffnung (11a) des Planetwalzenextruders zugegeben, sondern es erfolgt eine sogenannte Nachdosierung von Initiator während der laufenden Polymerisation über weitere, stromab befindliche Öffnungen (11 b und 11 c) im Planetwalzenextruder. Vorzugsweise werden an dieser Stelle flüssige Initiatoren oder Mischungen hiervon eingesetzt. Aber auch konzentrierte Lösungen der Initiatoren in Monomeren sind denkbar und im Sinne dieser Erfindung. Zudem können den Initiatoren über die Mischer (6 und 8) weitere Zusätze wie beispielsweise den Polymerisationsgrad senkende Substanzen zugegeben werden. Die Mischungen werden dann in die entsprechenden Vorratstanks (7 und 9) gefüllt, aus denen sie dann kontinuierlich in den Polymerisationsreaktor dosiert werden. Die Handhabung und Zuführung erfolgt analog der vorher beschriebenen Weise in den Planetwalzenextruder. Die jeweiligen Einfüllstutzen an den Dosieröffnungen (11b und 11c) sind temperierbar ausgeführt, um deren Erwärmung über die heißen Zylinderwandungen und damit einen vorzeitigen Zerfall der Polymerisationsinitiatoren zu verhindern.

Zum Absenken der auf dem Geleffekt basierenden hohen Reaktionsgeschwindigkeit und der Vermeidung der damit häufig verbundenen unerwünschten Gelbildung im Polymer ist es gemäß der vorliegenden Erfindung vorteilhaft, während des Polymerisationsprozesses Anteile an Substanzen zuzugeben, die die Viskosität der Polymermischung absenken. Dies können Plastifizierungsmittel oder auch Harze oder Weichharze oder auch Lösemittel sein, die in einem Vorratstank (10) vorgehalten werden. Dabei sollte deren Anteil nur so groß sein, dass sie den Polymerisationsfortschritt nicht wesentlich eindämmen. Die Zugabe dieser viskositätssenkenden Stoffe erfolgt vorzugsweise nach Polymerisationsstart über separate Dosieröffnungen (12b und 12c) im Planetwalzenextruder. Besonders für schnell reagierende Mischungen mit hohen Exothermien kann aber auch die Zugabe von kleinen Anteilen zum Reaktionsstart (12a) vorteilhaft sein. Aufgrund der Bauform von Planetwalzenextrudern müssen bei Verwendung von Festharzen diese vor ihrer Dosierung aufgeschmolzen und in schmelzeflüssiger Form dem Planetwalzenextruder zudosiert werden. Eine Temperierung des Vorratstanks (10) sowie sämtlicher produktführender Bauteile ist dann erforderlich.

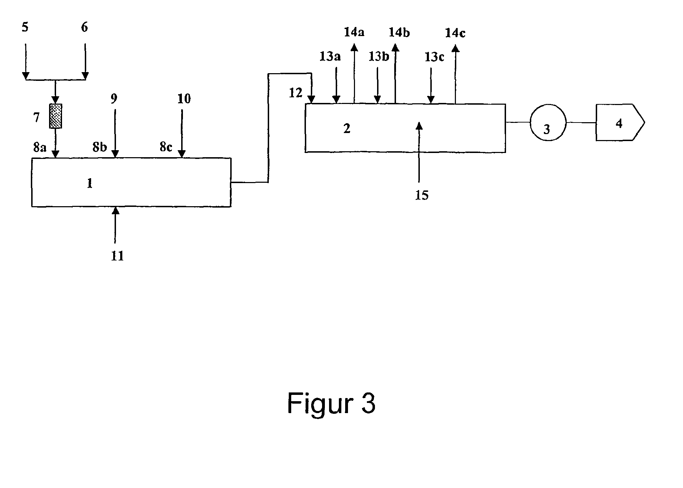

Das Vinylpolymer beziehungsweise das Vinylprepolymer verlässt den als Polymerisationsreaktor dienenden Planetwalzenextruder über die Austrittsöffnung (13), nach der es entweder gleich einer nachfolgenden Beschichtungseinheit oder zuerst noch einem Veredelungsprozess zugeführt wird. Ein Beispiel hierfür zeigt Figur 3.

Figur 3 zeigt das erfindungsgemäße zweistufige Verfahren einer kontinuierlichen, lösemittelfreien Polymerisation in einem Planetwalzenextruder (1) mit nachgeschalteter Entfernung von Restmonomeren sowie Compoundierung zur einer druckempfindlichen Selbsthaftklebemasse, die danach inline einer Beschichtungseinheit zugeführt wird.

Dazu wird eine Mischung aus Monomeren (5) und eine konzentrierte monomerische Initiatorlösung (6), die gegebenenfalls Kettenübertragungsagenz enthält, über einen statischen Mischer (7) geführt, darin zu einer homogenen vermischt, vorgewärmt und in die erste Eintrittsöffnung (8a) des erfindungsgemäßen Planetwalzenextruders (1) dosiert, in dem die Reaktion unmittelbar nach Eintritt startet und in der Viskosität schnell ansteigt. Durch Zugabe einer Menge Harzschmelze (11) wird die Viskosität gesenkt, damit die Wärmeabfuhr vergleichmäßigt und die Tendenz zur Gelbildung innerhalb des Polymers unterdrückt. Um zu einem möglichst hohen Umsatz zu kommen, werden stromab weitere Initiatoren (9, 10) beziehungsweise Mischungen hiervon über die Extruderöffnungen (8b und 8c) zudosiert.

Das entstehende Vinylpolymer wird dann über einen Stutzen (12) in einen nachgeschalteten Extruder (2) geführt, wo es unter Einfluss von Wärme und Vakuum (14a-c) und mit Hilfe von sogenannten Schleppmitteln (13a-c) wie Wasser oder Stickstoff von einem Großteil nicht umgesetzter Monomeren befreit wird. Zudem können im zweiten Extruder weitere Stoffe (15) zugegeben und zu einem homogen Vinylpolymer-Compound gemischt werden, wie sie typischerweise zur Herstellung von druckempfindlichen Selbstklebemassen verwendet werden. Dies können klebrigmachende Harze, Vernetzer oder auch andere modifzierende Einsatzstoffe sein. Als Extruder (2) für diesen Prozess eignen sich sowohl Einwellen-, besonders aber Zweiwellen- oder Mehrwellenextruder.

Die auf diese Weise hergestellten druckempfindlichen Klebmassen werden vorzugsweise mittels nachgeschalteter Schmelzepumpe (3) einer Beschichtungseinheit (4) für bahnförmige Trägermaterialien übergeben. Dies kann jedes Aggregat sein, das für die für die Verarbeitung von Klebstoffen mit diesen Molekulargewichten beziehungsweise Viskositäten geeignet ist. Beispielhaft seien hier Extrusionsdüsen, Walz- oder Kalanderauftragswerke genannt.

## Patentansprüche

1. Verfahren zur kontinuierlichen Polymerisation von Vinylmonomeren zu Vinylpolymeren,
**dadurch gekennzeichnet, dass**
die Polymerisation in einem Planetwalzenextruder erfolgt.

2. Verfahren zur kontinuierlichen Polymerisation von Vinylmonomeren zu Vinylpolymeren nach Anspruch 1,
**dadurch gekennzeichnet, dass**
die Vinylpolymeren ein Molekulargewicht M_{w} von mehr als 400.000 g/mol und/oder Polydispersitäten (M_{w}/Mₙ) von größer 5 aufweisen.

3. Verfahren nach Anspruch 1 oder 2,
**dadurch gekennzeichnet, dass**
die Polymerisation ohne Zugabe von Lösungsmittel erfolgt.

4. Verfahren nach zumindest einem der Ansprüche 1 bis 3,
**dadurch gekennzeichnet, dass**
die Polymerisation
a) in einem hydraulisch gefüllten Planetwalzenextruder erfolgt,
b) durch thermisch induzierten Zerfall von radikalbildenden Initiatoren durchgeführt wird,
c) in Anwesenheit von 0 bis 25 Gew.-%, bezogen auf die Vinylmonomeren, eines Lösemittels, erfolgt und/oder
d) in Anwesenheit von Harz oder Plastifizierungsmitteln in Anteilen von 0 bis 30 Gew.-% durchgeführt wird.

5. Verfahren nach zumindest einem der vorherigen Ansprüche,
**dadurch gekennzeichnet, dass**
die hydraulische Füllung des Planetwalzenextruders mit Reaktionsmischung erfolgt, indem
a) die Materialaustrittsöffnung des Planetwalzenextruders höher liegt als die maximale Füllhöhe der Reaktionsmischung innerhalb der Walzenzylinder,
b) sich Zentralspindel und Planetenspindeln entgegen der durch die Schrägverzahnung üblicherweise induzierten Materialförderrichtung drehen, wobei die Förderung des Reaktionsgemisches innerhalb des Planetwalzenextruders erfolgt.

6. Verfahren nach Anspruch 5,
**dadurch gekennzeichnet, dass**
die Förderung des Reaktionsgemisches innerhalb des PlanetwalZenextruders dann mittels der Speisepumpe für die Vinylmonomeren erfolgt.

7. Verfahren nach zumindest einem der vorherigen Ansprüche,
**dadurch gekennzeichnet, dass**
die Mischung der Vinylmonomeren vor Eintritt in den Planetwalzenextruder auf Temperaturen von mehr als 50 °C vorgewärmt werden.

8. Verfahren nach zumindest einem der vorherigen Ansprüche,
**dadurch gekennzeichnet, dass**
die Initiatoren gekühlt und erst unmittelbar vor Eintritt des Monomerstroms in den Planetwalzenextruder den Vinylmonomeren zugegeben werden.

9. Verfahren nach zumindest einem der vorherigen Ansprüche,
**dadurch gekennzeichnet, dass**
stromab der Verfahrenslänge des Planetwalzenextruders an mindestens einer weiteren Stelle weitere Initiatoren zugegeben werden.

10. Verfahren nach zumindest einem der vorherigen Ansprüche,
**dadurch gekennzeichnet, dass**
die Initiatoren zum Starten der Reaktion Halbwertszeiten von 10 Stunden bei Temperaturen kleiner 120 °C aufweisen und gewählt werden aus der Gruppe der Azo-Initiatoren, der Gruppe der organischen Peroxide oder aus Gemischen von Initiatoren der genannten Gruppen.

11. Verfahren nach zumindest einem der vorherigen Ansprüche,
**dadurch gekennzeichnet, dass**
die Initiatoren, die stromab der Verfahrenslänge zugegeben werden, Halbwertszeiten von 10 Stunden bei Temperaturen größer 50 °C aufweisen und gewählt werden aus der Gruppe der Azo-Initiatoren, der Gruppe der organischen Peroxide oder aus Gemischen von Initiatoren der genannten Gruppen.

12. Verfahren nach zumindest einem der vorherigen Ansprüche,
**dadurch gekennzeichnet, dass**
die Vinylmonomeren Verbindungen enthalten beziehungsweise der bereits anpolymerisierten Reaktionsmischung Verbindungen zudosiert werden, die das Molekulargewicht während der Polymerisation mindern.

13. Verfahren nach Anspruch 12,
**dadurch gekennzeichnet, dass**
die Verbindungen gewählt werden aus der Gruppe der Nitroxylverbindungen, Thiole, 2,2,6,6-Tetr methylpiperidinyloxyl-Derivate, Thioester, Thiocarbonate, Alkohole, Ether, und halogenierten Kohlenwasserstoffe.

14. Verfahren nach zumindest einem der vorherigen Ansprüche,
**dadurch gekennzeichnet, dass**
dem Reaktionsgemisch nach Beginn der Polymerisation Flüssigharze, Harzschmelzen oder Plastifizierungsmittel in Anteilen von 0 bis 30 Gew.-% zugegeben werden.

15. Verfahren nach zumindest einem der vorherigen Ansprüche,
**dadurch gekennzeichnet, dass**
die Vinylmonomeren zu mehr als 30 % zu Vinylpolymeren umgesetzt werden.

16. Verfahren nach zumindest einem der vorherigen Ansprüche,
**dadurch gekennzeichnet, dass**
die Vinylpolymeren von ihren flüchtigen Bestandteilen befreit werden.

17. Verfahren nach zumindest einem der vorherigen Ansprüche,
**dadurch gekennzeichnet, dass**
die Vinylpolymeren von ihren flüchtigen Bestandteilen inline befreit werden.

18. Verfahren nach zumindest einem der vorherigen Ansprüche,
**dadurch gekennzeichnet, dass**
die Vinylpolymeren mit weiteren Stoffen wie klebrig machenden Harzen, Füllstoffen Vernetzer beziehungsweise Vernetzerhilfsmittel versetzt werden und auf diese Weise Vinylpolymercompounds hergestellt werden, die als druckempfindliche Selbsthaftklebemassen Verwendung finden.

19. Verfahren nach zumindest einem der vorherigen Ansprüche,
**dadurch gekennzeichnet, dass**
die Vinylpolymeren inline mit weiteren Stoffen wie klebrigmachenden Harzen, Füllstoffen Vernetzer beziehungsweise Vernetzerhilfsmittel versetzt werden und auf diese Weise Vinylpolymercompounds hergestellt werden, die als druckempfindliche Selbsthaftklebemassen Verwendung finden.

20. Verfahren nach zumindest einem der vorherigen Ansprüche,
**dadurch gekennzeichnet, dass**
die Vinylpolymeren in einer nachgeschalteten Verfahrensstufe als Vinyl-Prepolymere zur Herstellung von druckempfindlichen Selbsthaftklebemassen eingesetzt werden.

21. Verfahren nach zumindest einem der vorherigen Ansprüche,
**dadurch gekennzeichnet, dass**
die Vinylpolymeren beziehungsweise die Vinylpolymercompounds inline zum Herstellprozess auf bahnförmige Trägermaterialien aufgebracht werden.

## Claims

1. Method for the continuous polymerization of vinyl monomers to vinyl polymers,
**characterized in that**
the polymerization takes place in a planetary roller extruder.

2. Method for continuous polymerization of vinyl monomers to vinyl polymers according to Claim 1,
**characterized in that**
the vinyl polymers have a molecular weight M_{w} of more than 400 000 g/mol and/or polydispersities (M_{w}/Mₙ) of greater than 5.

3. Method according to Claim 1 or 2,
**characterized in that**
the polymerization takes place without addition of solvent.

4. Method according to at least one of Claims 1 to 3,
**characterized in that**
the polymerization
a) takes place in a hydraulically filled planetary roller extruder,
b) is carried out by thermally induced decomposition of free radical-forming initiators,
c) takes place in the presence of 0 to 25% by weight, based on the vinyl monomers of a solvent, and/or
d) is carried out in the presence of resin or plasticizers in fractions of 0 to 30% by weight.

5. Method according to at least one of the preceding claims,
**characterized in that**
the hydraulic filling of the planetary roller extruder with reaction mixture takes place by means of
a) the material exit aperture of the planetary roller extruder being situated higher than the maximum fill level of the reaction mixture within the roller barrels,
b) central spindle and planetary spindles rotate counter to the material conveying direction normally induced by the helical gearing, the conveying of the reaction mixture within the planetary roller extruder.

6. Method according to Claim 5,
**characterized in that**
the conveying of the reaction mixture within the planetary roller extruder then takes place by means of the preferred feed pump for the vinyl monomers.

7. Method according to at least one of the preceding claims,
**characterized in that**
the mixture of the vinyl monomers is preheated, prior to entering the planetary roller extruder, to temperatures of more than 50°C.

8. Method according to at least one of the preceding claims,
**characterized in that**
the initiators are cooled and are added to the vinyl monomers not until immediately before entry of the monomer stream into the planetary roller extruder.

9. Method according to at least one of the preceding claims,
**characterized in that**
further initiators are added at at least one further site downstream of the process section of the planetary roller extruder.

10. Method according to at least one of the preceding claims,
**characterized in that**
the initiators for initiating the reaction have half-lives of 10 hours at temperatures of less than 120°C and are selected from the group of the azo initiators, from the group of the organic peroxides, or from mixtures of initiators of the stated groups.

11. Method according to at least one of the preceding claims,
**characterized in that**
the initiators added downstream of the process section have half-lives of 10 hours at temperatures of more than 50°C and are selected from the group of the azo initiators, from the group of the organic peroxides, or from mixtures of initiators of the groups stated.

12. Method according to at least one of the preceding claims,
**characterized in that**
the vinyl monomers contain compounds and/or the reaction mixture which has already been initially polymerized is supplied with compounds which lower the molecular weight during the polymerization.

13. Method according to Claim 12,
**characterized in that**
the compounds are selected from the group of the nitroxyl compounds, thiols, 2,2,6,6-tetramethylpiperidinyloxyl derivatives, thioesters, thiocarbonates, alcohols, ethers, and halogenated hydrocarbons.

14. Method according to at least one of the preceding claims,
**characterized in that**
liquid resins, resin melts or plasticizers are added in fractions of 0 to 30% by weight to the reaction mixture after the beginning of polymerization.

15. Method according to at least one of the preceding claims,
**characterized in that**
more than 30% of the vinyl monomers are reacted to vinyl polymers.

16. Method according to at least one of the preceding claims,
**characterized in that**
the vinyl polymers are freed from their volatile constituents.

17. Method according to at least one of the preceding claims,
**characterized in that**
the vinyl polymers are freed from their volatile constituents inline.

18. Method according to at least one of the preceding claims,
**characterized in that**
the vinyl polymers are admixed with further substances such as tackifying resins, fillers, crosslinkers and/or crosslinker assistants and, in this way, vinyl polymer compounds are prepared which find use as pressure-sensitive self-adhesive compounds.

19. Method according to at least one of the preceding claims,
**characterized in that**
the vinyl polymers are admixed, inline, with further substances such as tackifying resins, fillers, crosslinkers and/or crosslinker assistants and, in this way, vinyl polymer compounds are prepared which find use as pressure-sensitive self-adhesive compounds.

20. Method according to at least one of the preceding claims,
**characterized in that**
the vinyl polymers are used in a downstream process stage as vinyl prepolymers for producing pressure-sensitive self-adhesive compounds.

21. Method according to at least one of the preceding claims,
**characterized in that**
the vinyl polymers or the vinyl polymer compounds are applied inline to the production operation to carrier materials in web form.

## Revendications

1. Procédé pour la polymérisation continue de monomères de vinyle en polymères de vinyle, **caractérisé en ce que** la polymérisation est réalisée dans une extrudeuse planétaire.

2. Procédé pour la polymérisation continue de monomères de vinyle en polymères de vinyle selon la revendication 1, **caractérisé en ce que** les polymères de vinyle présentent un poids moléculaire M_{w} supérieur à 400 000 g/mole et/ou des polydispersités (M_{w}/Mₙ) supérieures à 5.

3. Procédé selon la revendication 1 ou 2, **caractérisé en ce que** la polymérisation est réalisée sans addition de solvants.

4. Procédé selon au moins l'une quelconque des revendications 1 à 3, **caractérisé en ce que** la polymérisation
a) est réalisée dans une extrudeuse planétaire remplie de manière hydraulique,
b) est réalisée par une décomposition induite thermiquement d'initiateurs formant des radicaux,
c) est réalisée en présence de 0 à 25% en poids, par rapport aux monomères de vinyle, d'un solvant et/ou
d) est réalisée en présence de résine ou de plastifiants en des proportions de 0 à 30% en poids.

5. Procédé selon au moins l'une quelconque des revendications précédentes, **caractérisé en ce que** la charge hydraulique de l'extrudeuse planétaire avec le mélange réactionnel est réalisée **en ce que**
a) l'ouverture d'évacuation pour la matière de l'extrudeuse planétaire est plus haute que la hauteur de remplissage maximale du mélange réactionnel dans le cylindre,
b) l'axe central et les axes planétaires tournent dans le sens opposé au sens de transport de la matière usuellement induit par l'engrenage denté en biais, le transport du mélange réactionnel étant réalisé dans l'extrudeuse planétaire.

6. Procédé selon la revendication 5, **caractérisé en ce que** le transport du mélange réactionnel est alors réalisé dans l'extrudeuse planétaire au moyen de la pompe d'alimentation pour les monomères de vinyle.

7. Procédé selon au moins l'une quelconque des revendications précédentes, **caractérisé en ce que** le mélange des monomères de vinyle est préchauffé avant son entrée dans l'extrudeuse planétaire à des températures supérieures à 50°C.

8. Procédé selon au moins l'une quelconque des revendications précédentes, **caractérisé en ce que** les initiateurs sont refroidis et ne sont ajoutés aux monomères de vinyle que juste avant l'entrée du flux de monomères dans l'extrudeuse planétaire.

9. Procédé selon au moins l'une quelconque des revendications précédentes, **caractérisé en ce qu'**on ajoute en aval de la longueur de procédé de l'extrudeuse planétaire, en au moins un autre endroit, d'autres initiateurs.

10. Procédé selon au moins l'une quelconque des revendications précédentes, **caractérisé en ce que** les initiateurs présentent, au début de la réaction, des durées de demi-vie de 10 heures à des températures inférieures à 120°C et sont choisis dans le groupe des initiateurs azo, le groupe des peroxydes organiques ou parmi les mélanges d'initiateurs des groupes mentionnés.

11. Procédé selon au moins l'une quelconque des revendications précédentes, **caractérisé en ce que** les initiateurs, qui sont ajoutés en aval de la longueur de procédé, présentent des durées de demi-vie de 10 heures à des températures supérieures à 50°C et sont choisis dans le groupe des initiateurs azo, le groupe des peroxydes organiques ou parmi les mélanges des initiateurs des groupes mentionnés.

12. Procédé selon au moins l'une quelconque des revendications précédentes, **caractérisé en ce que** les monomères de vinyle contiennent des composés ou **en ce qu'**on ajoute en dosant au mélange réactionnel en cours de polymérisation des composés qui diminuent le poids moléculaire pendant la polymérisation.

13. Procédé selon la revendication 12, **caractérisé en ce que** les composés sont choisis dans le groupe des composés nitroxyle, des thiols, des dérivés de 2,2,6,6-tétraméthylpipéridinyloxyle, des thioesters, des thiocarbonates, des alcools, des éthers et des hydrocarbures halogénés.

14. Procédé selon au moins l'une quelconque des revendications précédentes, **caractérisé en ce qu'**on ajoute au mélange réactionnel après le début de la polymérisation des résines liquides, des masses fondues de résines ou des plastifiants en des proportions de 0 à 30% en poids.

15. Procédé selon au moins l'une quelconque des revendications précédentes, **caractérisé en ce que** les monomères de vinyle sont convertis à raison de plus de 30% en polymères de vinyle.

16. Procédé selon au moins l'une quelconque des revendications précédentes, **caractérisé en ce que** les polymères de vinyle sont libérés de leurs constituants volatils.

17. Procédé selon au moins l'une quelconque des revendications précédentes, **caractérisé en ce que** les polymères de vinyle sont libérés de leurs constituants volatils en ligne.

18. Procédé selon au moins l'une quelconque des revendications précédentes, **caractérisé en ce que** les polymères de vinyle sont mélangés avec d'autres substances, telles que des résines qui rendent adhésif, des charges, des réticulants ou des adjuvants de réticulation et qu'on prépare de cette manière des compounds de polymères de vinyle qui sont utilisés comme masses auto-adhésives sensibles à la pression.

19. Procédé selon au moins l'une quelconque des revendications précédentes, **caractérisé en ce que** les polymères de vinyle sont mélangés en ligne avec d'autres substances, telles que des résines qui rendent adhésif, des charges, des réticulants ou des adjuvants de réticulation et qu'on prépare de cette manière des compounds de polymères de vinyle qui sont utilisés comme masses auto-adhésives sensibles à la pression.

20. Procédé selon au moins l'une quelconque des revendications précédentes, **caractérisé en ce que** les polymères de vinyle sont utilisés dans une étape de procédé disposée en aval comme prépolymères de vinyle destinés à la préparation de masses auto-adhésives sensibles à la pression.

21. Procédé selon au moins l'une quelconque des revendications précédentes, **caractérisé en ce que** les polymères de vinyle ou les compounds de polymères de vinyle sont appliqués en ligne avec le procédé de préparation sur des matériaux support en forme de bande.
